# EUROPEAN PATENT SPECIFICATION

(11) **EP 2 963 001 B1**
(45) Date of publication and mention of the grant of the patent: **06.11.2024**
(21) Application number: 14756979.2
(22) Date of filing: 25.02.2014
(51) Int. Cl.: C04B 35/83, C04B 35/52, C04B 41/83, C04B 41/87, C21D 1/00

(54) **OIL QUENCHING HEAT TREATMENT FURNACE TRAY**
WÄRMEBEHANDLUNGSOFENSCHALE FÜR ÖLQUENCHING
PLATEAU DE FOUR DE TRAITEMENT THERMIQUE DE TREMPE À L'HUILE

(30) Priority: 26.02.2013 JP 2013036415
(43) Date of publication of application: 06.01.2016
(73) Proprietor: Toyo Tanso Co., Ltd., Osaka-shi, Osaka 555-0011 (JP)
(72) Inventor: BITO, Shingo, Mitoyo-shi Kagawa 769-1102 (JP); TOMITA, Yuji, Mitoyo-shi Kagawa 769-1102 (JP); FUJIOKA, Yuji, Mitoyo-shi Kagawa 769-1102 (JP); TOMITA, Syuhei, Mitoyo-shi Kagawa 769-1102 (JP); MACHINO, Hiroshi, Mitoyo-shi Kagawa 769-1102 (JP)
(74) Representative: Glawe, Delfs, Moll
(86) International application number: PCT/JP2014/054478
(87) International publication number: WO 2014/132955

(56) References cited:
- EP-A2- 2 415 735
- JP-A- 2000 103 686
- JP-A- 2001 123 219
- JP-A- 2001 123 219
- JP-A- 2004 067 478
- JP-A- 2004 067 478
- JP-A- H0 748 191
- US-A- 5 665 464
- WESTERMARCK S: "Use of Mercury Porosimetry and Nitrogen Adsorption in Characterisation of the Pore Structure of Mannitol and Microcrystalline Cellulose Powders, Granules and Tablets", 8 November 2000 (2000-11-08), pages 1 - 60, XP002621064, ISBN: 978-952-91-2535-7, Retrieved from the Internet <URL:http://ethesis.helsinki.fi/julkaisut/mat/farma/vk/westermarck/useofmer.pdf> [retrieved on 20110203]
- No further relevant documents disclosed

## Description

### TECHNICAL FIELD

The present invention relates to an oil quenching heat treatment furnace tray.

### BACKGROUND ART

A high-temperature heat treatment at 800°C or higher is carried out in a heat treatment furnace. A tray made of metal tends to cause deformation or develop cracks during use because of its insufficient strength at high temperatures, so it has a short lifetime. A tray made of a carbon material such as a C/C composite has higher strength at high temperatures than the tray made of metal. Therefore, it shows less deformation and fewer cracks even at a high-temperature heat treatment. Moreover, the carbon material makes lightweight design possible and can therefore keep the heat capacity of the tray small, resulting in an additional advantage of low power consumption in the furnace operation. However, the carbon material is a porous material containing a large number of pores in the material. For this reason, if, after the heat treatment, the workpiece to be heat-treated is quenched by immersing it in oil with the tray, the oil infiltrates into the pores of the C/C composite and remains therein. When such a tray is used again, the remaining oil is decomposed during the heat treatment, which may cause adverse effects on the workpiece, such as discoloration of the workpiece.

A C/C composite tray for oil quenching heat treatment furnaces in which silicon is impregnated in a C/C composite material is disclosed as the C/C composite tray that solves such problems. (See Patent Literature 1 below.)

### CITATION LIST

### Patent Literature

[Patent Document 1] Japanese Published Unexamined Patent Application No. 2004-067478

Document JP H0748191 A discloses a carbon fiber reinforced C/C composite material precursor, having a pore size of 0.1 µm or more and a porosity of 5 to 30%, impregnated with a thermosetting resin composition, then heat-cured, and finally heat treated. The impregnated and heat treated composite may be used as a metallurgical tray.

### SUMMARY OF INVENTION

### TECHNICAL PROBLEM

However, with the C/C tray impregnated with silicon, the high temperature treatment is likely to cause the workpiece and the silicon component therein to react with each other and thereby produce silicide. Consequently, there is a risk that the quality of the product may be adversely affected. Moreover, the impregnated silicon adds an extra weight to the tray, which ruins an advantage of the carbon material, being light in weight. Also, there is a risk that the impregnated silicon may increase the heat capacity. Furthermore, silicon has high wettability with oil. As a consequence, in order to prevent oil from infiltrating in the tray, it is necessary to make the open pore rate extremely small by forming a dense structure, which aggravates the problems as described above and also makes the manufacturing process more complicated.

In view of the foregoing problems, it is an object of the present invention to provide a tray for oil quenching heat treatment furnaces that can inhibit oil infiltration to reduce adverse effects on the quality of the workpiece and also can make lightweight design of the tray possible.

### SOLUTION TO PROBLEM

In order to accomplish the foregoing object, the present invention provides an oil quenching heat treatment furnace tray composed of carbon material obtainable from a C/C composite impregnated with thermosetting resin and burned, the tray being capable of placing a workpiece thereon for oil quenching of the workpiece, characterized in that a cumulative pore volume of pores with a pore radius of greater than or equal to 1 µm is less than or equal to 40 mm³/g in the carbon material.

### ADVANTAGEOUS EFFECTS OF INVENTION

The present invention has a significant advantageous effect that it can provide a tray for oil quenching heat treatment furnaces that can inhibit oil infiltration to reduce adverse effects on the quality of the workpiece and also can make lightweight design of the tray possible.

### BRIEF DESCRIPTION OF DRAWINGS

[Fig. 1] Fig. 1 is a graph showing the cumulative pore volume of pores with a pore radius of less than 1 µm and the cumulative pore volume of pores with a pore radius of greater than or equal to 1 µm in Examples 1 to 3 as well as Comparative Examples 1 and 2.
[Fig. 2] Fig. 2 is a graph showing the relationship between the cumulative pore volume of pores with a pore radius of greater than or equal to 1 µm and the amount of oil impregnated.

### DESCRIPTION OF EMBODIMENTS

The present invention provides an oil quenching heat treatment furnace tray composed of carbon material obtainable from a C/C composite impregnated with thermosetting resin and burned, the tray being capable of placing a workpiece thereon for oil quenching of the workpiece, characterized in that a cumulative pore volume of pores with a pore radius of greater than or equal to 1 µm is less than or equal to 40 mm³/g in the carbon material.

Allowing the carbon material to have a cumulative pore volume of less than or equal to 40 mm³/g of pores with a pore radius of greater than or equal to 1 µm can remarkably reduce the amount of infiltrating oil. Moreover, because the tray is composed of a carbon material, adverse effects on the quality of the workpiece can be prevented.

It is desirable that the carbon material be formed using a C/C composite.

The tray made of a C/C composite has higher strength at high temperatures and higher thermal shock resistance than the tray made of metal. Therefore, it shows less deformation and fewer cracks even at a high-temperature heat treatment. Moreover, the C/C composite makes lightweight design possible and can therefore keep the heat capacity of the tray small, resulting in an additional advantage of low power consumption.

It is desirable that the carbon material be such that a C/C composite is impregnated with a thermosetting resin and burned.

Thus, a structure in which the material for adjusting the cumulative pore volume does not easily separate can be provided without impairing the superior characteristics of the C/C composite material. In addition, after having been processed into a tray, the C/C composite allows oil to infiltrate therein from the processed edge surfaces. Thus, it becomes possible to coat the edge surfaces by the impregnation.

It is desirable that the carbon material be such that a raw material thereof has a cumulative pore volume of greater than or equal to 70 mm³/g before being impregnated.

The C/C composite is intrinsically a porous material, so the effect of reducing the cumulative pore volume by the impregnation is great.

It is desirable that the carbon material have a bulk density of less than or equal to 1.8 g/cm³.

Using the carbon material to form the tray allows the bulk density to be adjusted to less than or equal to 1.8 g/cm³ easily, and allows the tray to be configured to be lightweight easily.

It is desirable that the oil quenching heat treatment furnace tray be used in a carburization treatment.

The carburization treatment may cause the thermal shock resistance of the metal and the silicon to degrade and may consequently cause cracks to occur at the time of quenching. However, forming the tray from the carbon material serves to prevent embrittlement from developing even when the carburization treatment is carried out. As a result, it is possible to prevent the thermal shock resistance from degrading.

It is desirable that the heat treatment furnace to be used be a furnace that is used at about 800°C to about 1000°C.

### EXAMPLES

### (Example 1)

Plate materials made of CX-761 (a C/C material prepared by using PAN-based carbon fibers, adding a phenolic resin thereto, press-forming the resulting article, and thereafter repeating pitch impregnation and burning 3 times to densify the material, which resulted in a bulk density of 1.63 Mg/m³ and a cumulative pore volume of 55 m³/g of pores with a pore radius of greater than or equal to 1 µm) manufactured by Toyo Tanso Co., Ltd. and having a thickness of 5 mm were put together and formed into a tray shape to prepare a tray precursor. This tray precursor was impregnated with a phenolic resin (made by Sumitomo Bakelite Co., Ltd.) having a specific gravity of 1.16 under atmospheric pressure one time, and the precursor, which was impregnated with the phenolic resin, was then burned. Thereby, an oil quenching heat treatment furnace tray (hereinafter may be simply referred to as a heat treatment furnace tray) was obtained that had a bulk density of 1.63 Mg/m³ and a cumulative pore volume of 30 mm³/g of pores with a pore radius of greater than or equal to 1 µm.

### (Example 2)

The tray precursor prepared in the manner described in Example 1 was immersed in a phenolic resin having a specific gravity of 1.16 (made by Sumitomo Bakelite Co., Ltd.) under a reduced pressure, thereafter pressure impregnated with the resin at 0.5 MPa, and burned one time, to thereby obtain a heat treatment furnace tray.

### (Example 3) - not according to the invention

A tray precursor prepared in the same manner as described in Example 1 was disposed in a vacuum furnace and heated to 1100°C. Thereafter, while CH₄ gas was being flowed at a flow rate of 10 (L/min), the pressure was controlled to be 10 Torr and kept for 100 hours, to cause the tray precursor to be impregnated with pyrocarbon by a CVI process, so that a heat treatment furnace tray was obtained.

### (Comparative Example 1)

The tray precursor prepared in the manner described in Example 1 was used as it was, as a heat treatment furnace tray.

### (Comparative Example 2)

The tray precursor prepared in the manner described in Example 1 was impregnated with a phenolic resin having a specific gravity of 1.03 (made by Sumitomo Bakelite Co., Ltd.) one time under atmospheric pressure, and the resulting tray precursor was burned, to obtain a heat treatment furnace tray.

### (Experiment 1)

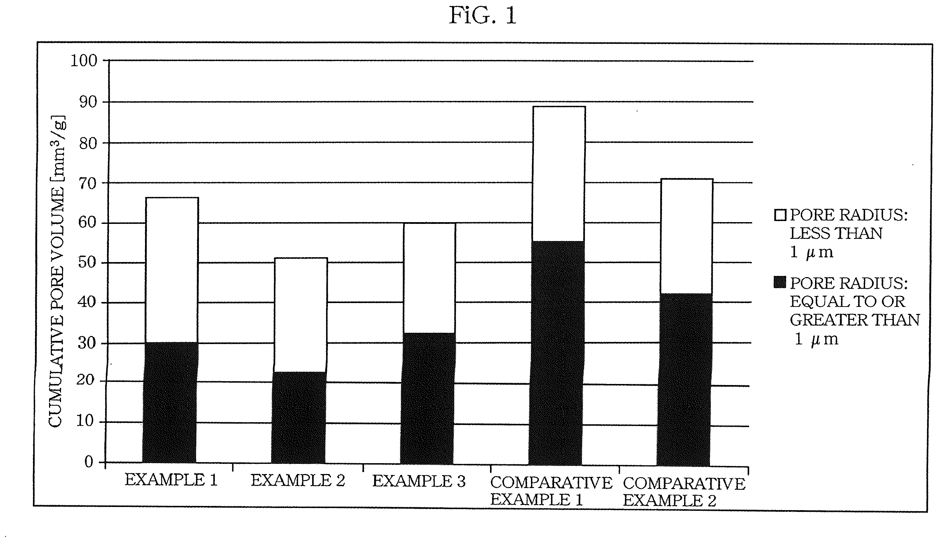

The bulk density and the cumulative pore volumes (the cumulative pore volume of pores with a pore radius of less than 1 µm and the cumulative pore volume of pores with a pore radius of greater than or equal to 1 µm) were determined for each sample of the heat treatment furnace trays shown in Examples 1 to 3 and Comparative Examples 1 and 2 above. The results are shown in Table 1 above and Fig. 1.

The bulk density was measured using an electronic densimeter (ED-120T available from Mirage Trading Co., Ltd.) making use of an Archimedes technique (a method of obtaining the density of a sample using the natural law to the effect that a solid submerged in a fluid is acted on by a buoyant force, the magnitude of which is equal to the weight of the fluid having the same volume as that of the solid). The cumulative pore volume was obtained by performing a pore size distribution measurement by a mercury intrusion method and graphically representing the results. In the mercury intrusion method, the maximum applied pressure was 108 MPa, and the pore radius was obtained from the mercury intrusion pressure determined by a mercury porosimeter according to the Washburn equation. The Washburn equation is represented as r = -2δcosθ/P, where r is the pore radius, δ is the mercury's surface tension (480 dyne/cm), θ is the contact angle (141.3° was employed in the present experiment), and P is the pressure.

**TABLE 1**

| | Bulk density (Mg/m³) | Cumulative pore volume (mm³/g) | | Amount of infiltrating oil (mg/cm³) |
|---|---|---|---|---|
| | | Pore radius ≥ 1 µm | Pore radius < 0.1 µm | |
| Example 1 | 1.68 | 30 | 25 | 35 |
| Example 2 | 1.69 | 22 | 19 | 26 |
| Example 3 | 1.69 | 32 | 17 | 36 |
| Comparative Example 1 | 1.63 | 55 | 28 | 67 |
| Comparative Example 2 | 1.66 | 42 | 21 | 52 |

As clearly seen from Table 1 and Fig. 1, it is observed that each sample of Examples 1 to 3 had a higher bulk density than those of Comparative Examples 1 and 2 and also had a small cumulative pore volume, less than or equal to 40 mm³/g of pores with a pore radius of greater than or equal to 1 µm.

### (Experiment 2)

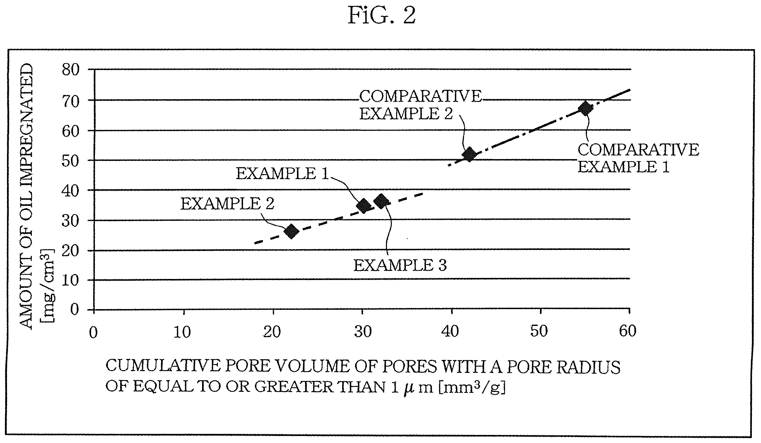

The amount of infiltrating oil was determined for each of the respective samples of the heat treatment furnace trays as shown in Examples 1 to 3 as well as Comparative Examples 1 and 2 above. The results are shown in Table 1 above and Fig. 2. The experiment was carried out in the following manner.

Each sample of the heat treatment furnace trays shown in Examples 1 to 3 and Comparative Examples 1 and 2 was weighed in advance, immersed in oil at 120°C under atmospheric pressure for 1 hour, and thereafter allowed to stand for 30 minutes. Then, the weight of each sample after the immersing was measured. The increased weight was divided by the surface area, to obtain the amount of infiltrating oil per volume.

The present inventors have discovered that when the amount of infiltrating oil exceeds 40 mg/cm³, oil, a solvent used in the washing process, or the like infiltrates into the pores in the heat treatment furnace tray and remains therein, causing problems such as a considerable decrease of the degree of vacuum in the furnace. As clearly seen from Table 1 and Fig. 2, all the Examples 1 to 3 showed that the amount of infiltrating oil was less than or equal to 40 mg/cm³, while both Comparative Examples 1 and 2 showed that the amount of infiltrating oil exceeded 40 mg/cm³. Therefore, Examples 1 to 3 can avoid problems such as a significant decrease of the degree of vacuum in the furnace.

### INDUSTRIAL APPLICABILITY

The present invention is applicable to, for example, a carburization treatment.

## Claims

1. An oil quenching heat treatment furnace tray composed of a carbon material obtainable from a C/C composite impregnated with a thermosetting resin and burned, the tray being capable of placing a workpiece thereon for oil quenching of the workpiece, **characterized in that** a cumulative pore volume of pores with a pore radius of greater than or equal to 1 µm is less than or equal to 40 mm³/g in the carbon material, measured in accordance with the mercury intrusion method defined in the description.

2. The oil quenching heat treatment furnace tray according to claim 1, wherein the carbon material is such that a raw material thereof has a cumulative pore volume of greater than or equal to 70 mm³/g in the raw material, measured in accordance with the mercury intrusion method defined in the description, before being impregnated.

3. The oil quenching heat treatment furnace tray according to claim 1 or 2, wherein the carbon material has a bulk density of less than or equal to 1.8 g/cm³.

## Patentansprüche

1. Wärmebehandlungsofenschale für Ölquenching, bestehend aus einem Kohlenstoffmaterial, das aus einem C/C-Verbundmaterial erhältlich ist, das mit einem wärmehärtenden Harz imprägniert und gebrannt ist, wobei die Schale geeignet ist, um darauf ein Werkstück zum Ölquenching des Werkstücks zu platzieren, **dadurch gekennzeichnet, dass** ein kumulatives Porenvolumen der Poren mit einem Porenradius von größer oder gleich 1 µm in dem Kohlenstoffmaterial bei Messung gemäß dem in der Beschreibung definierten Quecksilberintrusionsverfahren kleiner oder gleich 40 mm³/g ist.

2. Wärmebehandlungsofenschale für Ölquenching nach Anspruch 1, wobei das Kohlenstoffmaterial derart ist, dass ein Rohmaterial davon vor dem Imprägnieren bei Messung gemäß dem in der Beschreibung definierten Quecksilberintrusionsverfahren ein kumulatives Porenvolumen von größer oder gleich 70 mm³/g in dem Rohmaterial aufweist.

3. Wärmebehandlungsofenschale für Ölquenching nach Anspruch 1 oder 2, wobei das Kohlenstoffmaterial eine Schüttdichte von kleiner oder gleich 1,8 g/cm³ aufweist.

## Revendications

1. Plateau de four de traitement thermique par trempe à l'huile composé d'un matériau au carbone pouvant être obtenu à partir d'un composite C/C imprégné avec une résine thermodurcissable et cuit, le plateau permettant de placer une pièce de fabrication par-dessus pour une trempe à l'huile de la pièce de fabrication, **caractérisé en ce qu'**un volume de pores cumulé de pores avec un rayon de pore supérieur ou égal à 1 µm est inférieur ou égal à 40 mm³/g dans le matériau au carbone, mesuré conformément à la méthode d'intrusion de mercure définie dans la description.

2. Plateau de four de traitement thermique par trempe à l'huile selon la revendication 1, dans lequel le matériau au carbone est tel qu'un matériau brut de celui-ci a un volume de pores cumulé supérieur ou égal à 70 mm³/g dans le matériau brut, mesuré conformément à la méthode d'intrusion de mercure définie dans la description, avant d'être imprégné.

3. Plateau de four de traitement thermique par trempe à l'huile selon la revendication 1 ou 2, dans lequel le matériau au carbone a une masse volumique apparente inférieure ou égale à 1,8 g/cm³.
